# EUROPEAN PATENT APPLICATION

(11) **EP 1 790 461 A2**
(43) Date of publication of application: **30.05.2007**
(21) Application number: 07104058.8
(22) Date of filing: 22.03.2002
(51) Int. Cl.: B29C 63/18

(54) **Methods and apparatuses for producing or working roller means, roller means for decorating objects.**

(30) Priority: 22.03.2001 IT MO20010054
(62) Divisional of application: 02716956.4
(71) Applicant: Nuova Astra SRL, 41043 Formigine MO (IT)
(72) Inventor: Sighinolfi, Sergio, 41100, Modena (IT); Biolchini, Mauro Italo, 41042, Fiorano Modenese (MO) (IT)
(74) Representative: Luppi, Luigi

(57) **Abstract**

A method for producing a roller (1) comprises positioning a base structure (2) of said roller (1) inside a mould (42), introducing flowable means in said mould (42) for forming an external coating of said roller (1), solidifying said flowable means and separating said roller (1) from said mould (42); said separating comprises placing detachment promoting means (55) between said external coating and said mould (42).

An apparatus for producing a roller (1) comprises a mould (42) for receiving flowable means during an introduction phase, said flowable means being suitable for forming a coating layer of said roller (1) during a solidification phase, said mould (42) having at least one inlet hole (54) through which detachment promoting means (55) are introduced between said roller (1) and said mould (42) for detaching said roller (1) from said mould (42).

## Description

This invention concerns methods and apparatuses for producing roller means and roller means that can, for example, be used to decorate objects such as ceramic tiles, textiles, films, foils and material in the form of sheets or ribbons in general.

The ceramics industry has for some time used rollers coated with soft material such as silicone, the flexible external layer of which can adapt to the surface irregularities of ceramic tiles and decorate them by transferring on such tiles an ornamental pattern without breaking them.

IT 1268912 discloses a method for manufacturing rollers coated with layers of elastic silicone material. According to such method, a cylindrical frame is positioned on a suitable machine, the cylindrical frame being provided with an external surface that is bored and designed to constitute the central structure supporting the rollers. The method further provides that a fluid/semi-fluid elastic silicone material is introduced inside such frame, which rotates around its own longitudinal axis. Due to the centrifugal force, during high-speed rotation this material passes through the holes obtained in the metal frame, so as to form a coating on said frame. The coating is subsequently solidified by a heat-induced hardening/polymerisation phase. One disadvantage of the disclosed method is that the heating phase greatly complicates the machine, inasmuch as heating devices are required to heat the coating layer to a high temperature and control devices are required to ensure that heating takes place in the required manner.

In addition, the disclosed method consumes a great amount of energy because a not insignificant amount of energy is required to heat the coating layer.

Lastly, this method is not without risks for the operator, who may accidentally come into contact with machine parts that have been heated to a high temperature and he may thus become burnt.

A further disadvantage of the method disclosed in IT 1268912 consists in the fact that the phases of introduction of the elastic silicone material, distribution of said material outside the frame and solidification of the coating layer must take place in rotation. The machine must therefore be able to rotate the cylindrical frame, the mould and a plurality of devices suitable for closing the mould, and said machine must be of suitable dimensions to overcome the inertia of all these apparatuses at different rotation speeds, including very high rotation speeds.

An object of this invention is to improve and simplify the methods and apparatuses for producing roller means.

A further object of this invention is to provide methods and apparatuses for manufacturing roller means that consume little energy.

Another object of this invention is to improve the safety of the methods and apparatuses for manufacturing roller means.

In a first aspect of this invention, a method for producing roller means is provided, comprising providing a base structure and coating said base structure with tubular means, characterised in that said coating comprises fitting said tubular means on said base structure.

In an advantageous version, said fitting comprises applying on said tubular means gluing means through spraying means, suitable for uniformly distributing an adequate quantity of said gluing means.

In a further advantageous version, said fitting further comprises turning inside out at least one first portion of said tubular means on at least a second portion of said tubular means, so as to make accessible a first initially internal region of said tubular means, applying said gluing means on said first initially internal region, and repositioning said at least one first portion in contact with said base structure.

In yet another further advantageous version, said fitting further comprises turning inside out said at least one second portion of the tubular means on said at least one first portion of such tubular means, so as to make accessible a second initially internal region of the tubular means, applying the gluing means on said second initially internal region, and repositioning said at least one second portion in contact with the base structure.

In yet another further advantageous version, the method according to the invention further comprises rotating the roller means at a relatively low speed to allow a uniform distribution of the gluing means between the base structure and the tubular means arranged outside said base structure.

Owing to this aspect of the invention, a significantly simplified method for producing roller means is defined, since such method comprises operations that are carried out at room temperature. The risks for the operator and the high energy consumption due to high temperature are thus totally eliminated.

Moreover, it is not necessary to rotate moulds or devices connected thereto, because only the roller means need to be rotated; the rotating masses thus have greatly reduced inertia and the equipment can be dimensioned less critically, also because rotation occurs at low speeds.

In an advantageous version, the method further comprises preparing said base structure by shaping a rigid lamina according to a cylindrical geometry, to obtain rigid support means.

Advantageously, said preparing further comprises applying, on said rigid support means, elastically deformable flexible means, such as sponge means, initially in the form of a sheet.

Thus, the complications arising from centrifugal casting of the flexible means are avoided.

In a second aspect of this invention, a method for producing tubular means is provided, comprising injecting flowable means into a cavity defined inside mould means, said flowable means being suitable for forming said tubular means, and further comprising solidifying said flowable means, characterised in that, between said mould means and said tubular means, separator means are inserted, suitable for allowing said tubular means to be detached from said mould means. Advantageously, said solidifying occurs at ambient temperature and at atmospheric pressure.

In an advantageous version, said separator means comprise flexible separator means.

In a further advantageous version, said mould means comprise punch means and matrix means, the punch means being slidable in relation to the matrix means, so as to enable said tubular means to be extracted from said mould means.

In a further advantageous version, said separator means are placed between said punch means and said tubular means.

Thus, it is possible to eliminate any type of rotating devices, which significantly simplifies the equipment for implementing the method.

In a third aspect of the invention, an apparatus for producing tubular means is provided, comprising mould means suitable for receiving flowable means arranged for forming said tubular means, characterised in that it further comprises separator means suitable for allowing said tubular means to be detached from said mould means.

In an advantageous version, said separator means comprise flexible separator means.

Owing to these second and third aspects of the invention, it is possible to obtain an extremely simple and effective method and apparatus for producing tubular means. Such method and apparatus do not require high temperatures and are therefore economical in terms of energy consumption and virtually without risk for the operator.

Moreover, owing to the separator means, the mould means can surround the periphery of the tubular means without interruptions.

In a fourth aspect of the invention, a method for producing roller means is provided, comprising positioning a base structure inside substantially continuous shell means, introducing flowable means in a space identified between said base structure and said shell means, said flowable means being suitable for forming an external coating of said roller means, and further comprising solidifying said flowable means, characterised in that during said introducing and during said solidifying said shell means are substantially stationary.

In a preferred version, said solidifying occurs at ambient temperature and at atmospheric pressure.

Owing to this aspect of the invention, it is possible to obtain an extremely simple method for producing roller means which does not require heat, and makes the manufacture of roller means safer and more economical than is the case with prior-art roller means.

In a fifth aspect of the invention, an apparatus for producing roller means is provided, comprising substantially continuous shell means suitable for receiving flowable means during an introduction phase, said flowable means being suitable for forming a coating layer of said roller means during a solidification phase, characterised in that it further comprises holding means suitable for keeping said shell means stationary during said introduction phase and during said solidification phase.

In an advantageous version, said shell means mainly extend along a longitudinal axis and can be tilted in relation to a work axis to enable optimal positioning of said roller means.

In a preferred version, said work axis is substantially perpendicular to said longitudinal axis.

Owing to these fourth and fifth aspects of the invention, complications regarding the centrifugal casting of the roller means are prevented.

In a sixth aspect of the invention, roller means for processing objects are provided, comprising a support structure suitable for supporting at least one intermediate layer arranged for giving said roller means a certain flexibility, and tubular means arranged outside said intermediate layer and suitable for interacting with said objects, characterised in that, between said support structure and said at least one intermediate layer, or between said at least one intermediate layer and said tubular means, at least one adhesive layer is placed.

Owing to this aspect of the invention, the complications inherent in the centrifugal casting of the intermediate layer and/or of the tubular means are eliminated.

In a seventh aspect of the invention, an apparatus for grinding sponge means is provided, comprising tool means suitable for removing a surface layer of said sponge means, characterised in that said tool means comprise abrasive means.

In one advantageous version, said tool means are in the form of a disc coated with an abrasive material.

In a further advantageous version, the tool means are provided with a rotational movement and interact with the sponge means at a circular surface of said disc.

In a further advantageous version, said abrasive material is glass paper.

Owing to this aspect of the invention, it is possible to grind sponge materials and obtain a very good surface finish. Such surface finish is comparable to the finish that can be obtained by producing the sponge materials through a process of pouring into a mould the surface of which has been highly polished.

This has the advantage of eliminating the disadvantages connected with centrifugal casting of the sponge means.

The invention can be better understood and carried out with reference the attached drawings, which illustrate some exemplifying and not restrictive embodiments thereof, wherein:
Figure 1 is a schematic section of roller means that can be obtained by a method according to the invention;
Figure 2 is a schematic section showing a first phase of said method;
Figure 3 is a schematic section showing a subsequent phase of said method;
Figure 4 is a schematic section showing a further subsequent phase of said method;
Figure 5 is a schematic section showing an even further subsequent phase of said method;
Figure 6 is a schematic section of the roller means of Figure 1 in an alternative version;
Figure 7 is a partially sectioned front view of an apparatus for producing tubular means in a closed configuration;
Figure 8 is a partially sectioned front view of the apparatus of Figure 7 in an open configuration;
Figure 9 is a front view of an apparatus for producing roller means by a method according to the invention;
Figure 10 is a partially sectioned, schematic side view of the apparatus of Figure 9 in a first phase of the method;
Figure 11 is a partially sectioned, schematic side view of the apparatus of Figure 9 in an intermediate step of the method;
Figure 12 is a schematic front view of the apparatus of Figure 9 in a conclusive step of the method.

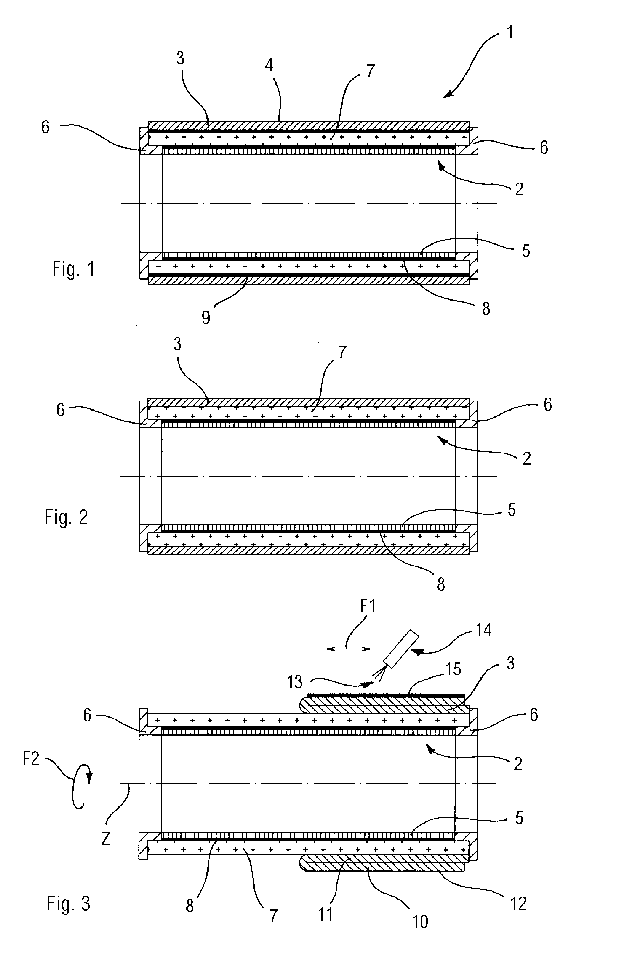

With reference to Figure 1, a roller 1 is shown, comprising a base structure 2 that is externally coated by a tubular element 3 and which can, for example, be used to decorate ceramic tiles after an ornamental pattern has been cut into the external surface 4 of the tubular element 3.

The base structure 2 comprises an inner core 5 that is preferably made from a metallic material such as a net or bored sheet metal, or from plastic, whereby the base structure 2 is given sufficient rigidity and at the same time the weight of the base structure 2 is minimised to facilitate handling operations and reduce the inertia that is created during the rotation of the roller 1 on the decorating machine. To the side ends of the inner core 5 two flanges 6 are connected, said flanges 6 being suitable for allowing the roller 1 to be mounted on the decorating machine.

The base structure 2 further comprises, outside the inner core 5, an intermediate layer 7, made from an easily flexible and deformable material such as silicone in a sponge form, that has the task of giving the roller 1 such a flexibility as to enable the roller 1 to exert a pressure on the tiles in order to transfer onto them an ornamental pattern, without breaking or damaging said tiles. Between the intermediate layer 7 and the inner core 5 a first layer of glue 8 is placed, said first layer of glue 8 being suitable for sticking the intermediate layer 7 to the inner core 5. A second layer of glue 9 placed between the intermediate layer 7 and the tubular element 3 prevents any sliding of the latter in relation to the structure underneath, which sliding must be under all circumstances avoided in order not to impair the accuracy of the decorating machine.

The base structure 2 can be set up in the manner described below. We start with an initially flat rectangular metallic net that is given a cylindrical form, for example by calendering, and it is welded along the joining line parallel to the cylinder axis to obtain the inner core 5, at the side ends of which the two flanges 6, that have been previously prepared, are welded. At this point the intermediate layer 7 is constructed starting with the silicone sponge, which has also initially a flat rectangular shape and is wrapped around the inner core 5, the first layer of glue 8 being placed between. The glue is obviously placed also along the joining line of the silicone sponge.

The base structure 2 that is thus obtained is subjected to grinding of the intermediate layer 7 to obtain perfect roundness that is vital for the purposes of accuracy of the decorating machine.

The intermediate sponge layer 7 is ground by an abrasive disc that is rotated rapidly around an axis that is perpendicular to the disc plane. The abrasive disk is also provided with a translation movement in an advancing direction. The abrasive disc comprises, for example, a metal circular element that is coated with glass paper arranged on a plurality of sectors of the circular element. The base structure 2, which has already been covered with the intermediate layer 7, is rotated around its own longitudinal axis Z1 and interacts peripherally with the abrasive disc at a circular surface of said disc.

As Figure 2 shows, the tubular element 3 is then fitted onto the base structure 2; this operation is possible because of the deformable properties of the tubular element 3, which is usually made of elastic material that can easily be deformed such as silicone, or polyurethane, or rubber in general.

Afterwards, as shown in Figure 3, a first portion 10 of the tubular element 3 is turned inside out on a second portion 11 of said tubular element 3, to make a first initially internal region 12 of the tubular element 3 accessible. An adhesive substance 13 is applied on the first initially internal region 12 by means of spraying means 14. The spraying means 14 can be moved in the direction indicated by the arrow F1, to form a first part 15 of the second layer of glue 9. During this operation the base structure can be rotated around its longitudinal axis Z by motor means that have not been shown, as indicated by the arrow F2, to point to the spraying means 14 the first internal region 12 of the tubular element 3 along the entire extent of its circumference, which will thus be uniformly wet by the adhesive substance 13.

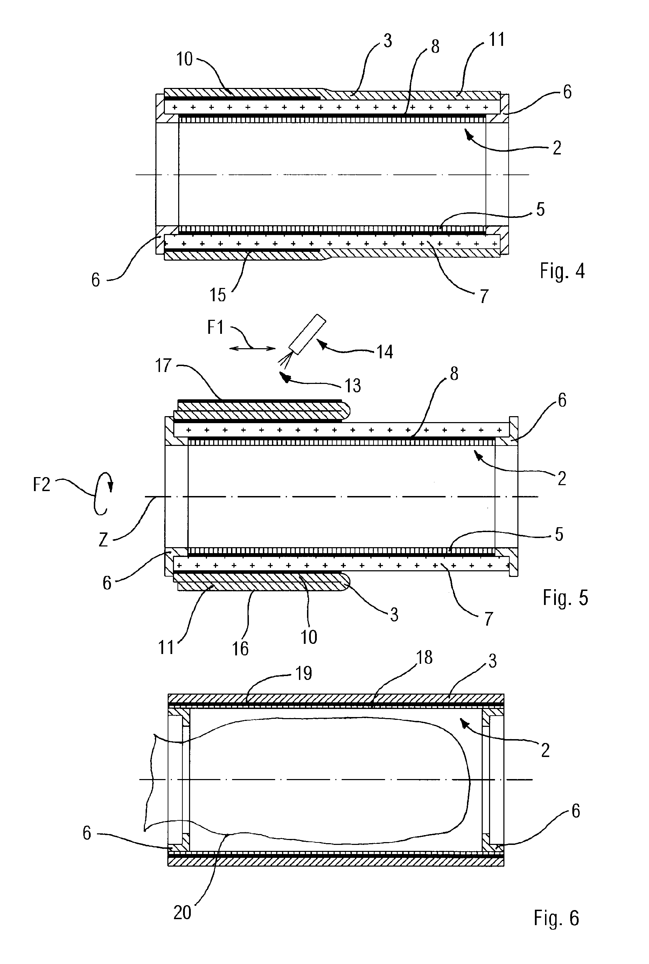

As Figure 4 shows, it is now possible to reposition the first portion 10 of the tubular element 3, together with the first part 15 of the second layer of glue 9, in contact with the base structure 2.

Subsequently, as shown in Figure 5, the second portion 11 of the tubular element 3 is turned inside out on the first portion 10 of the tubular element, thereby making accessible a second internal region 16 of said tubular element 3. Spraying means 14 apply an adhesive substance 13 on such internal region 16, in the manner previously described, to form a second part 17 of the second layer of glue 9. Repositioning the second portion 11, together with the second part 17 of the second layer of glue 9, the roller 1 is obtained, which is rotated around the axis Z by said motor means for another short period of time, so as to enable the adhesive substance 13 to properly penetrate the intermediate layer 7 and to stick to it firmly.

Owing to the spraying means 14, the adhesive substance 13 can be administered precisely, i.e. in a sufficient quantity to ensure high resistance to shear stress and at the same time low resistance to peeling of the second glue layer 9. High resistance to shear stress is fundamental to ensure that during rotating operation of the decorating machine no slipping between the base structure 2 and the tubular element 3 occurs whilst the low resistance to peeling enables the tubular element 3 to be easily removed from said base structure 2, for example if the tubular element 3, due to wear and tear, is no longer able to effectively perform its task on the decorating machine.

The rollers 1 described above can therefore easily be regenerated if they are worn or damaged by removing the worn tubular element 3 and fitting a new tubular element 3 on the base structure as previously explained. Thus, the old base structure 2 can be recycled, which saves significant amounts of time and money.

In an alternative version shown in Figure 6, the base structure 2 consists of a fabric 18 that is analogous to a silkscreen, comprising a cloth wrapped around a pair of end flanges 6 on which the tubular element 3 can be fitted and glued by means of a further layer of glue 19. The tubular element 3 is applied in the manner described previously; an expandable chamber 20 is further provided, said expandable chamber 20 being suitable for being inserted inside the base structure 2 and then being inflated by air to tension the fabric 18 and prevent wrinkles to be formed thereon during the tubular element 3 application and gluing phases. The expandable chamber 20 may comprise a bag made from a flexible hermetically sealed plastic material.

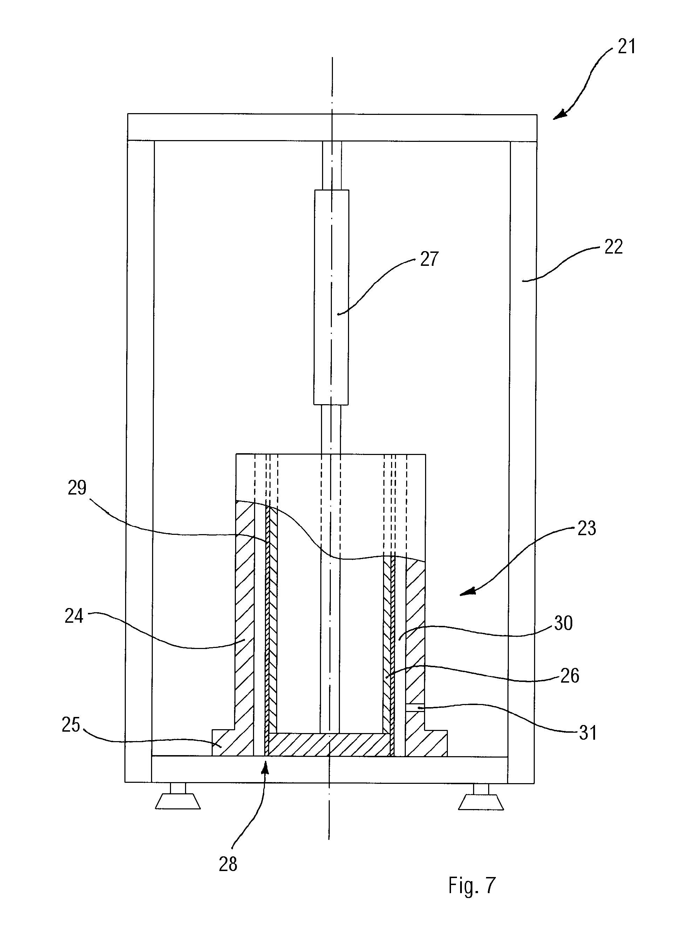

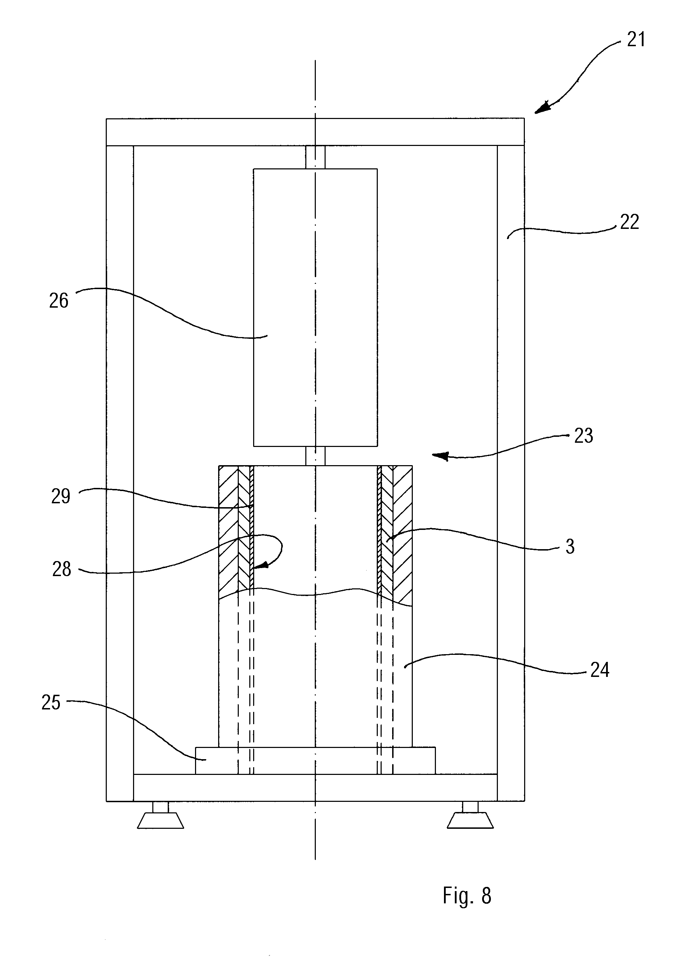

The tubular element 3 is obtained by proceeding as described below with reference to Figures 7 and 8, which figures show an apparatus 21 for producing a tubular element 3 comprising a framework 22 that supports mould means 23. The mould means 23 comprise a matrix 24, that is fixed to the framework 22. The matrix 24 is shaped according to a hollow cylindrical geometry and is provided with a support flange 25. The mould means 23 further comprise a punch 26, which is also shaped according to a hollow cylindrical geometry. The punch 26 may move from a work position, shown in Figure 7, in which it is arranged inside the matrix 24, and an unloading position, shown in Figure 8, in which it is disengaged from said matrix 24 and arranged above it. In its translation movement the punch 26 is driven by a linear actuator 27 connected to the framework 22 of the apparatus 21.

Outside the punch 26 separator means 28 are provided, said separator means 28 being suitable for enabling the detachment of the punch 26 from the tubular element 3; the separator means 28 preferably comprise a flexible plastic bag 29, which plastic bag is wrapped tautly and without wrinkles around the punch 26.

To produce a tubular element 3, the punch 26 is moved down by the linear actuator 27 until said punch 26 is completely introduced inside the matrix 24, as shown in Figure 7. In this way a cavity 30 is identified, said cavity 30 being arranged between the matrix 24 and the punch 26. Inside the cavity 30 flowable means can be injected, suitable for forming the tubular element, at the end of a solidification process. The flowable means may be in fluid or granular form and preferably comprise a silicone fluid obtained by mixing a base agent with a catalyst agent; the resulting fluid is injected, by a feed circuit that is not shown, inside the cavity 30 through an inlet opening 31 in the bottom of the matrix 26, i.e. near the support flange 25.

The silicone fluid is supplied until the cavity 30 is completely filled. The cavity 30 is filled from bottom to top to ensure that no air bubbles are included in the fluid mass; subsequently the base agent is catalysed by the catalyst agent and progressively hardens until a preset consistency is reached. This solidification operation takes place in conditions of ambient temperature and of atmospheric pressure and humidity and makes the process particularly simple and manageable even for an unskilled operator.

When the silicone fluid has acquired the right consistency and the tubular element 3 can be considered to have been formed, the linear actuator 27 lifts the punch 26 above the matrix 24; during this lifting the flexible plastic bag 29 is detached from the punch 26 and remains attached to the internal surface of the tubular element 3. At this point an operator manually separates the tubular element 3 from the matrix 24 and from the bag 29, exploiting the flexibility of the tubular element 3 and the bag 29. The apparatus 1 is now ready to produce a new tubular element 3, after the punch 26 has been wrapped with a new bag 29. This last operation is extremely important, because if there were no bag 29, the tubular element 3 would be irreparably torn during extraction of the punch 26 from the matrix 24.

Owing to the perfect surface finish that distinguishes both the internal surface of the matrix 24 and the external surface of the punch 26, the tubular element 3 thereby obtained requires no grinding and can be fitted on the base structure 2 as previously described.

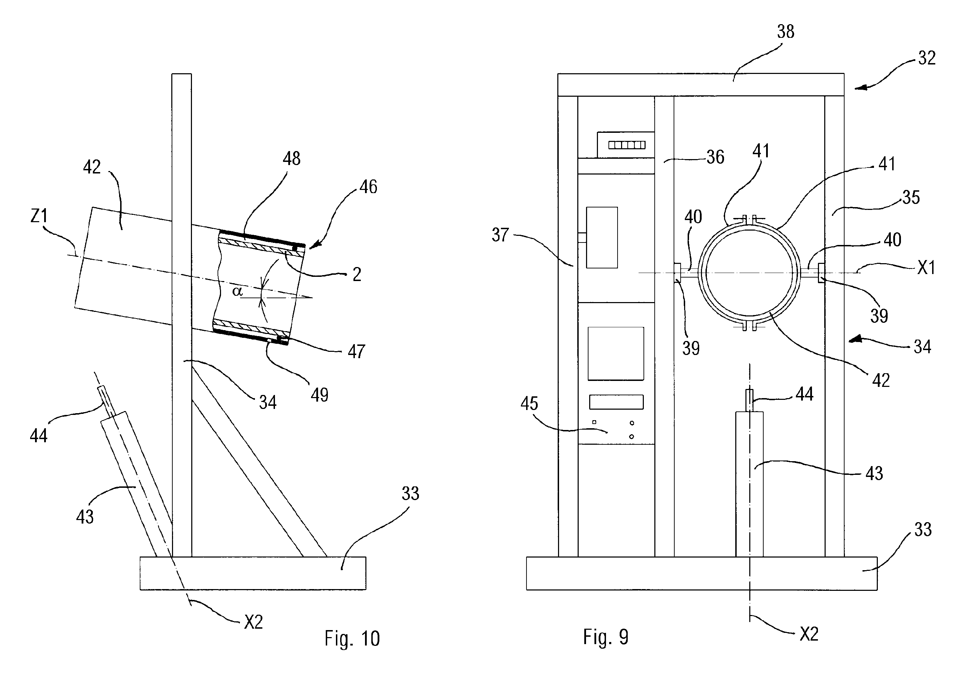

Figures 9 to 12 show a machine 32 for producing rollers similar to those described previously, according to an alternative method.

The machine 32 comprises a support base 33 and a frame 34, basically identified by three vertical beams 35, 36, 37 and by a crossbeam 38. On the first beam 35 and on the second beam 36 two supports 39 are fitted. The first ends of two pins 40 are rotationally engaged with the two supports 39. The two pins 40 are connected at their second ends to two semicircular holding brackets 41. The holding brackets 41 are connected to each other to support a cylindrical shell 42, obtained, for example, by a tube cut to a prefixed length. The holding brackets keep the cylindrical shell 42 stationary during the manufacture of the roller means that will be explained below. If a certain force is applied, the cylindrical shell 42 can be tilted around a work axis X1 by rotating the pins 40 in relation to the supports 39. At the bottom of the frame 34 there is a jack 43, the top of which is provided with a threaded shank 44. The jack 43 is arranged along a sliding axis X2 that basically lies on the vertical plan identified by the longitudinal axis Z1 of the cylindrical shell 42.

In the space defined between the second beam 36 and the third beam 37 control devices 45 are housed.

The machine 32 enables the rollers to be obtained by pouring directly on a base structure 2, which is analogous to the one described previously, flowable means that are suitable for creating an external layer made of a material that can be easily deformed and is flexible. The flowable means preferably comprise a silicone fluid that is obtained, as has already been seen, by mixing a base agent with a catalyst agent. After solidification, this mixture will form a layer of elastic coating on the base structure 2.

Initially, the base structure 2 is inserted inside the cylindrical shell so that the axis Z of the base structure coincides with axis Z1 of the cylindrical shell. The base structure 2 is locked in this position by fixing means 46 that comprise a rubber ring 47 that expands to ensure centering of the base structure 2 and immobilises it through interference fitting. Between the cylindrical shell 42 and the base structure 2 a hollow cylindrical space or lining 48 is thus identified, inside which a silicone fluid is injected through a hole 49 made at one extremity of the cylindrical shell 42, in the immediate vicinity of the rubber ring 47. Before the injection operation the cylindrical shell 42 is tilted by rotating it around the said first axis X1, so that the axis Z1 of the cylindrical shell 42 is tilted in relation to the horizontal direction by an angle α of about 10°. The cylindrical shell 42 is maintained in this position for the entire duration of the injection operation because, by so doing, the silicone fluid is injected into the lining 48 from the bottom to the top and the risk of including air bubbles inside said fluid is eliminated.

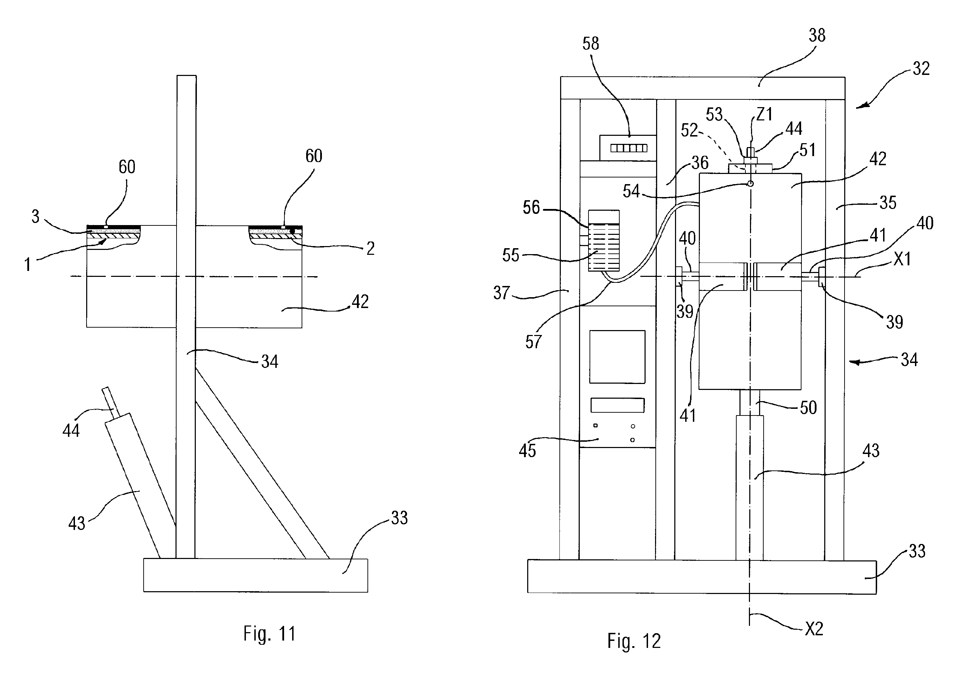

When the entire lining 48 has been filled, the flow of silicone fluid is interrupted and the cylindrical shell 42 and its contents are placed in a basically horizontal configuration as shown in Figure 11 (a = 0°). At this point two vent holes 60 are opened in a top portion of the cylindrical shell 42, said vent holes 60 being suitable for enabling air or any gas generated during solidification of the silicone fluid to escape, thereby helping the coating layer that is being formed to relax.

When the silicone is completely solidified, thereby creating a finished roller 1 arranged inside the cylindrical shell 42, the latter and its contents must be placed in a vertical position as shown in Figure 12.

By acting on the control devices 45, a rod 50 is caused to come out of the jack 43. The rod 50 is vertically placed inside the base structure 2 mounted on the cylindrical shell 42, until said rod protrudes from the top of the base structure 2. A stop plate 51, provided with a central hole 52 through which the threaded shank 44 passes, is positioned above the cylindrical shell 42 and is blocked there by an item threaded with a nut 53, thereby fixing the rod 50 on said shell 42.

Through a further hole 54 made in the upper part of the cylindrical shell 42, an element promoting detachment is now introduced between the coating layer of the base structure 2 and the cylindrical shell. Such element may be, for example, soapy water 55 taken from the tank 56 by means of a conduit 57. A measuring device 58 enables the quantity of soapy water 55 leaving the tank to be measured and the discharge to be stopped when the required quantity has been reached.

At this point the jack 43 pulls back the rod 50, and with it the finished roller 1, downwards; the roller 1 easily detaches from the cylindrical shell 42 owing to the soapy water 55 and it can be taken from the machine 32 and stored in stores or sent to other subsequent operations that are not contemplated here.

In the context of this description the means and method steps indicated can be taken in isolation or considered in the combinations indicated, even if they are part of any other possible combination.

## Claims

1. Method for producing a roller (1), comprising positioning a base structure (2) of said roller (1) inside a mould (42), introducing flowable means in said mould (42) for forming an external coating of said roller (1), solidifying said flowable means and separating said roller (1) from said mould (42), **characterised in that** said separating comprises placing detachment promoting means (55) between said external coating and said mould (42).

2. Method according to claim 1, wherein said detachment promoting means comprise soapy water (55).

3. Method according to claim 1, or 2, and further comprising metering said detachment promoting means (55) to insert said detachment promoting means (55) between said mould (42) and said roller (1) in a preset quantity.

4. Method according to any preceding claims, wherein during said introducing and during said solidifying said mould (42) is substantially stationary.

5. Method according to claim 4, and further comprising tilting said mould (42) in relation to a work axis (X1), said work axis (X1) being different from a longitudinal axis (Z1) along which said mould (42) mainly extends.

6. Method according to claim 5, wherein said tilting comprises arranging said mould (42) in a solidifying position for solidifying said flowable means, said longitudinal axis (Z1) being substantially horizontal in said solidifying position.

7. Method according to claim 5, or 6, in which said tilting comprises arranging said mould (42) in a discharging position for discharging said roller (1) from said mould (42), said longitudinal axis (Z1) being substantially vertical in said discharging position.

8. Method according to any one of claims 5 to 7, wherein said tilting comprises arranging said mould (42) in an inserting position for inserting said flowable means in said mould (42), in said inserting position said longitudinal axis (Z1) being slightly oblique in relation to a horizontal plane.

9. Method according to claim 8, wherein, in said inserting position, said longitudinal axis (Z1) of said mould (42) is tilted by about 10° in relation to said horizontal plane.

10. Method according to any preceding claim, wherein said positioning comprises interposing between said base structure (2) and said mould (42) locking means (46) suitable for allowing said base structure (2) to be centered and locked.

11. Method according to claim 10, wherein said locking means (46) comprise at least one deformable ring (47).

12. Method according to any preceding claim, wherein said solidifying further comprises relaxing said flowable means by allowing them to communicate with the external environment through at least one vent hole (60).

13. Method according to any preceding claim, wherein said mould comprises substantially continuous shell means (42) .

14. Method according to claim 13, wherein said flowable means are introduced in a space (48) identified between said base structure (2) and said substantially continuous shell means (42).

15. Apparatus for producing a roller (1), comprising a mould (42) for receiving flowable means during an introduction phase, said flowable means being suitable for forming a coating layer of said roller (1) during a solidification phase, **characterised in that** said mould (42) has at least one inlet hole (54) through which detachment promoting means (55) are introduced between said roller (1) and said mould (42) for detaching said roller (1) from said mould (42).

16. Apparatus according to claim 15, and further comprising a metering device (58) suitable for inserting said detachment promoting means (55) into said mould (42) in a preset and controlled quantity.

17. Apparatus according to claim 15, or 16, wherein said inlet hole (54) is connected to a tank (56) containing said detachment promoting means (55) by a conduit (57).

18. Apparatus according to claim 17, wherein said tank (56) contains soapy water (55).

19. Apparatus according to any one of claims 15 to 18, and further comprising holding means (41) suitable for keeping said mould (42) stationary during said introduction phase and during said solidification phase.

20. Apparatus according to any one of claims 15 to 19, wherein said mould comprises substantially continuous shell means (42).

21. Apparatus according to any one of claims 15 to 20, wherein said mould (42) mainly extends along a longitudinal axis (Z1) and can be tilted along a work axis (X1) to enable optimal positioning of said roller (1).

22. Apparatus according to claim 21, wherein said work axis (X1) is substantially perpendicular to said longitudinal axis (Z1).

23. Apparatus according to any one of claims 15 to 22, and further comprising locking means (46) for locking a base structure (2) of said roller (1), said base structure (2) being housed inside said mould (42).

24. Apparatus according to claim 23, wherein said locking means (46) comprise at least one deformable ring (47).

25. Apparatus according to any one of claims 15 to 24, wherein said mould (42) has at least one insertion hole (49) arranged for inserting said flowable means inside said mould (42).

26. Apparatus according to any one of claims 15 to 25, wherein said mould (42) has at least one vent hole (60) suitable for allowing said flowable means to communicate with the outer environment during said solidification phase.

27. Apparatus according to any one of claims 15 to 26, and further comprising extraction means (43) suitable for extracting said roller (1) from said mould (42).

28. Apparatus according to claim 27, wherein said extraction means comprise at least one jack (43).

29. Method for producing roller means (1), comprising providing a base structure (2) and coating said base structure (2) with tubular means (3), **characterised in that** said coating comprises fitting said tubular means (3) on said base structure (2).

30. Method according to claim 29, and further comprising applying, between said tubular means (3) and said base structure (2), gluing means (13) suitable for fixing said tubular means (3) to said base structure (2).

31. Method according to claim 30, wherein said applying gluing means (3) occurs through spraying means (14) suitable for distributing said gluing means (13) uniformly and in proper quantities.

32. Method according to claim 31, wherein said gluing means (14) are applied to said tubular means (3).

33. Method according to any one of claims 30 to 32, and further comprising turning inside out at least one first portion (10) of said tubular means (3) on at least one second portion (11) of said tubular means (3), so as to make a first internal region (12) of said tubular means (3) accessible, applying on said first internal region (12) said gluing means (13), and repositioning said at least one first portion (10) in contact with said base structure (2).

34. Method according to claim 33, and further comprising turning inside out said at least one second portion (11) on said at least one first portion (10), so as to make a second internal region (16) of said tubular means (3) accessible, applying on said second internal region (16) said gluing means (13), and repositioning said at least one second portion (11) in contact with said base structure (2).

35. Method according to any one of claims 30 to 34, and further comprising rotating said base structure (2) to enable said gluing means (13) to be uniformly distributed between said base structure (2) and said tubular means (3).

36. Method according to any one of claims 29 to 35, wherein said providing a base structure (2) comprises shaping flat lamina means according to a cylindrical geometry, to obtain rigid support means (5) of said base structure (2).

37. Method according to claim 36, and further comprising joining said flat lamina means along at least one joining line of said flat lamina means.

38. Method according to claim 36, or 37, wherein said providing further comprises arranging on said rigid support means (5) at least one intermediate layer (7), suitable for giving a preset flexibility to said base structure (2).

39. Method according to claim 38, wherein said arranging at least one intermediate layer (7) comprises bending further flat lamina means according to a cylindrical conformation.

40. Method according to claim 39, and further comprising fixing said further flat lamina means to said rigid support means (5).

41. Method according to claim 39, or 40, and further comprising connecting said further flat lamina means along at least one connecting line of said further flat lamina means.

42. Method according to any one of claims 29 to 41, and further comprising furnishing said base structure (2) with end flanges (6), suitable for enabling said base structure (2) to be mounted on a decorating machine.

43. Method according to any one of claims 29 to 42, and further comprising externally grinding said base structure (2) to eliminate possible circularity defects.

44. Method according to any one of claims 29 to 35, or according to claim 42 as appended to any one of claims 29 to 35, wherein said providing a base structure (2) comprises preparing a flexible cylindrical element (18) .

45. Method according to claim 45, and further comprising inserting inside said flexible cylindrical element (18) expandable chamber means (20) and inflating said expandable chamber means (20) to keep said flexible cylinder element (18) taut.

46. Method according to any one of claims 29 to 45, wherein said providing comprises removing worn or damaged tubular means (3) from pre-existing roller means (1).

47. Method for producing tubular means (3), comprising injecting flowable means into a cavity (30) defined inside mould means (23), said flowable means being suitable for forming said tubular means (3), and further comprising solidifying said flowable means, **characterised in that** between said mould means (23) and said tubular means (3) separator means (28) are inserted, suitable for allowing said tubular means (3) to be detached from said mould means (23).

48. Method according to claim 47, wherein said separator means comprise flexible separator means (28).

49. Method according to claim 47, or 48, wherein said mould means (23) comprise matrix means (24) and punch means (26).

50. Method according to claim 49, wherein said matrix means (24) and said punch means (26) are reciprocally translatable.

51. Method according to claim 49, or 50, wherein said matrix means (24) are substantially continuous.

52. Method according to any one of claims 49 to 51, wherein said punch means (26) are substantially continuous.

53. Method according to claim 48, or according to any one of claims 49 to 52, as claim 49 is appended to claim 48, wherein said flexible separator means comprise at least one flexible bag (28).

54. Method according to claim 53, as appended to any one of claims 49 to 52, wherein said at least one flexible bag (28) is wrapped around said punch means (26).

55. Method according to any one of claims 47 to 54, wherein said injecting occurs from the bottom to the top, so as not to include air inside said flowable means.

56. Method according to any one of claims 47 to 55, wherein said solidifying occurs at ambient temperature.

57. Method according to any one of claims 47 to 56, wherein said solidifying occurs at atmospheric pressure.

58. Apparatus for producing tubular means (3), comprising mould means (23) suitable for receiving flowable means arranged for forming said tubular means (3), **characterised in that** it further comprises separator means (28) suitable for allowing said tubular means (3) to be detached from said mould means (23).

59. Apparatus according to claim 58, wherein said separator means comprise flexible separator means (28).

60. Apparatus according to claim 58, or 59, wherein said mould means (23) comprise matrix means (24) and punch means (26), suitable for identifying a cavity (30) inside which said flowable means are inserted.

61. Apparatus according to claim 60, wherein said matrix means (24) and said punch means (26) are reciprocally translatable.

62. Apparatus according to claim 60, or 61, wherein said matrix means (24) are substantially continuous.

63. Apparatus according to any one of claims 60 to 62, wherein said punch means (26) are substantially continuous.

64. Apparatus according to claim 59, or according to any one of claims 60 to 63, as claim 60 is appended to claim 59, wherein said flexible separator means comprise at least one flexible bag (28).

65. Apparatus according to claim 64, as appended to any one of claims 60 to 63, wherein said at least one flexible bag (28) is wrapped around said punch means (26).

66. Apparatus according to any one of claims 58 to 65, and further comprising inlet means (31) through which said flowable means are injected into said mould means (23).

67. Apparatus according to claim 66, wherein said inlet means (31) are located in a lower part of said mould means (23), so as to inject said flowable means from bottom to top.

68. Method for producing roller means (1), comprising positioning a base structure (2) inside substantially continuous shell means (42), introducing flowable means in a space (48) identified between said base structure (2) and said shell means (42), said flowable means being suitable for forming an external coating of said roller means (1), and further comprising solidifying said flowable means, **characterised in that** during said introducing and during said solidifying said shell means (42) are substantially stationary.

69. Method according to claim 68, and further comprising tilting said shell means (42) in relation to a work axis (X1), other than a longitudinal axis (Z1) along which said shell means (42) mainly extend.

70. Method according to claim 69, wherein said tilting comprises placing said shell means (42) in a solidifying position for solidifying said flowable means, wherein said longitudinal axis (Z1) is substantially horizontal.

71. Method according to claim 69, or 70, wherein said tilting comprises placing said shell means (42) in a discharging position for discharging said roller means (1) from said shell means (42), wherein said longitudinal axis (Z1) is substantially vertical.

72. Method according to any one of claims 69 to 71, wherein said tilting comprises placing said shell means (42) in an inserting position for inserting said flowable means in said shell means (42), wherein said longitudinal axis (Z1) is slightly oblique in relation to a horizontal plane.

73. Method according to claim 72, wherein, in said inserting position, said longitudinal axis (Z1) of said shell means (42) is tilted by about 10° in relation to said horizontal plane.

74. Method according to any one of claims 68 to 73, wherein said positioning comprises placing between said base structure (2) and said shell means (42) locking means (46) suitable for allowing said base structure (2) to be centered and locked.

75. Method according to claim 74, wherein said locking means (46) comprise at least one deformable ring (47).

76. Method according to any one of claims 68 to 75, wherein said solidifying further comprises relaxing said flowable means by allowing them to communicate with the external environment through at least one vent hole (60).

77. Method according to any one of claims 68 to 76, and further comprising separating said roller means (1) from said shell means (42) by placing therebetween detachment promoting means (55).

78. Method according to claim 77, wherein said detachment promoting means comprise soapy water (55).

79. Method according to claim 77, or 78, and further comprising metering said detachment promoting means (55) to insert said detachment promoting means (55) between said shell means (42) and said roller means (1) in a preset quantity.

80. Apparatus for producing roller means (1), comprising substantially continuous shell means (42) suitable for receiving flowable means during an introduction phase, said flowable means being suitable for forming a coating layer of said roller means (1) during a solidification phase, **characterised in that** it further comprises holding means (41) suitable for keeping said shell means (42) stationary during said introduction phase and during said solidification phase.

81. Apparatus according to claim 80, wherein said shell means (42) mainly extend along a longitudinal axis (Z1) and can be tilted along a work axis (X1) to enable optimal positioning of said roller means (1).

82. Apparatus according to claim 81, wherein said work axis (X1) is substantially perpendicular to said longitudinal axis (Z1).

83. Apparatus according to any one of claims 80 to 82, and further comprising locking means (46) for locking a base structure (2) of said roller means (1), it being possible to house said base structure (2) inside said shell means (42).

84. Apparatus according to claim 83, wherein said locking means (46) comprise at least one deformable ring (47).

85. Apparatus according to any one of claims 80 to 84, wherein said shell means (42) further comprise at least one insertion hole (49), arranged for inserting said flowable means inside said shell means (42).

86. Apparatus according to any one of claims 80 to 85, wherein said shell means (42) further comprise at least one vent hole (60) suitable for allowing said flowable means to communicate with the outer environment during said solidification phase.

87. Apparatus according to any one of claims 80 to 86, wherein said shell means (42) further comprise at least one intake hole (54) of detachment promoting means (55) suitable for detaching said roller means (1) from said shell means (42).

88. Apparatus according to claim 87, and further comprising a metering device (58) suitable for inserting said detachment promoting means (55) into said shell means (42) in a preset and controlled quantity.

89. Apparatus according to any one of claims 80 to 88, and further comprising extraction means (43) suitable for extracting said roller means (1) from said shell means (42) .

90. Apparatus according to claim 89, wherein said extraction means comprise at least one jack (43).

91. Roller means for processing objects, comprising a support structure (2) suitable for supporting at least one intermediate layer (7) arranged for giving said roller means (1) a certain flexibility, and tubular means (3) arranged outside said intermediate layer (7) and suitable for interacting with said objects, **characterised in that**, between said support structure (2) and said at least one intermediate layer (7), or between said at least one intermediate layer (7) and said tubular means (3), at least one adhesive layer (8; 9) is placed.

92. Roller means according to claim 91, wherein between said support structure (2) and said intermediate layer (7) a first adhesive layer (8) is placed and between said intermediate layer (7) and said tubular means (3) a second adhesive layer is placed (9).

93. Roller means according to claim 91, or 92, wherein said support structure (2) has a cylindrical internally hollow shape.

94. Roller means according to any one of claims 91 to 93, wherein said support structure (2) is made from substantially rigid material.

95. Roller means according to any one of claims 91 to 94, wherein said support structure (2) is provided with openings arranged for reducing the weight of said roller means (1).

96. Roller means according to any one of claims 91 to 95, wherein said intermediate layer (7) is made from flexible and elastically deformable material.

97. Roller means according to claim 96, wherein said intermediate layer (7) is made from sponge material.

98. Roller means according to any one of claims 91 to 97, wherein said tubular means (3) are made from flexible and elastically deformable material.

99. Apparatus for grinding sponge means (7), comprising tool means suitable for removing a surface layer of said sponge means (7), **characterised in that** said tool means comprise abrasive means.

100. Apparatus according to claim 99, wherein said tool means have the shape of a disc.

101. Apparatus according to claim 100, wherein said disc is coated with abrasive material.

102. Apparatus according to claim 101, wherein said abrasive material is glass paper.

103. Apparatus according to claim 102, wherein said glass paper is arranged on circular sectors of said disc.

104. Apparatus according to any one of claims 99 to 103, wherein said tool means rotate around their own axis.

105. Apparatus according to any one of claims 99 to 104, wherein said tool means are provided with a translation movement in an advancing direction.

106. Apparatus according to any one of claims 99 to 105, wherein said sponge means (7) rotate around their own longitudinal axis (Z1).

107. Apparatus according to any one of claims 99 to 106, wherein said tool means interact with said sponge means (7) at a circular surface of said disc.
